# EUROPEAN PATENT APPLICATION

(11) **EP 2 452 998 A1**
(43) Date of publication of application: **16.05.2012**
(21) Application number: 11397522.1
(22) Date of filing: 23.09.2011
(51) Int. Cl.: C10G 2/00, C10J 3/00

(54) **Method for utilizing distillation fractions obtained from distillation of tall oil in BtL or cellulose factory**

(30) Priority: 16.11.2010 FI 20106204
(71) Applicant: VAPO OY, 40100 Jyväskylä (FI)
(72) Inventor: Mäkelä, Jani, 21410 Vanhalinna (FI); Timonen, Mika, 40420 Jyväskylä (FI)
(74) Representative: Vastavuo, Juhani Veli

(57) **Abstract**

The invention relates to a method for utilizing distillation fractions obtained from distillation of tall oil in a BtL plant. The essential feature of the method allows utilization of tall oil obtained from cellulose plants that is processed into different fractions and passed to different points of the BtL process for producing biofuels and utilizing the same in the gasification step and/or energy generation for the BtL process.

## Description

The invention relates to a method in accordance with the preamble of claim 1 for utilizing distillation fractions obtained from distillation of tall oil in a BtL or, when necessary, in a cellulose factory. The invention also relates to a use in accordance with claim 8.

In the art of biomass gasification are known low-temperature and high-temperature techniques that respectively operate either below or above the melting point of ash. Low-temperature gasifiers typically operate at a temperature of 1000 °C maximum and are implemented as either fixed-bed reactors (power rating less than 20 MW) or as fluidized-bed reactors (power rating above 20 MW). Fuel is fed into these reactors generally as a mass of solid, comminuted particles. Respectively, gasification takes place either above a fixed-bed distributor or in a fluidized bed. Use of liquid or gaseous raw materials in these gasifier types is difficult.

High-temperature gasifiers are operated at a temperature of about 1400 °C and carry out processes often requiring fuel comminuted to a fine particle size for firing a burner that serves as the gasifier unit. This kind of embodiment is characterized by allowing the burner to be relatively easily fired also with liquid and gaseous raw materials whose combustion in low-temperature gasifiers is complicated. Typically high-temperature gasifiers are operated as pressurized reactions using oxygen or a mixture of oxygen and steam and/or carbon dioxide as the gasification agent. A high-temperature gasifier is the gasification technology typically chosen for producing maximally pure syngas, e.g., for the needs of chemical or oil-refining industries.

In the art is also well known the Fischor-Tropsch method, abbreviated as the FT method, which is based on a catalyzed chemical reaction wherein synthesis gas containing only carbon monoxide and hydrogen is converted into various paraffinic hydrocarbons that at room temperature generally are waxy compounds. Typically, iron and cobalt catalysts are used. The principal target of the method is to produce synthetic oil compounds for use as synthetic fuel or lubricant.

The processing of syngas obtained after cleaning the product gas of biomass gasification in an FT reactor and postprocessing of FT products as an entity is called a Biomass-to-Liquids process, abbreviated as a BtL process.

A Fisher-Tropsch reactor typically gives two end products: a heavier FT wax often denoted as Heavy Fischer-Tropsch Liquid (HFTL) with hydrocarbon chains of about 15 to 100 carbon atoms, and lighter liquid product called Light Fischer-Tropsch Liquid (LFTL) with hydrocarbon chains of 5 to 30 carbon atoms. The FT products are taken to a refining unit designed to be compatible with the FT technique and catalyst used in the reactor.

The refining unit comprises plural different unit processes. The term hydrogenation unit, also known as a hydrotreater, primarily refers to a reactor wherein hydrogen is added to the reactive (unsaturated) bonds of a molecule. In other words, when a hydrogenated bond becomes saturated thereby losing its reactivity, the process is called hydrogenation or hydrogen bonding. The term cracking simply means the conversion of large hydrocarbon molecules into a smaller size, whereby this process unit is also known a hydrocracker (hydrogen addition cracking unit). Isomerization refers to a process wherein hydrocarbon chains are branched to obtain better fuel qualities for use in engines (i.a., modification of fuel cloud point). In the final distillation step, the different fuel fractions are separated from each other to obtain end product fractions such as diesel fuel, kerosene and naphtha.

Studies have been carried out to improve a BtL plant and its profitability. It has been found that a BtL plant may be particularly advantageously designed to utilize the byproducts of forest industry plants such as those of the pulp/paper plants. Especially the use of byproducts obtained from a sulfate cellulose plant in a BtL plant may bring up mutual benefits.

Among the byproducts of a sulfate cellulose factory one is crude tall oil by an average amount of 35 kg per ton of cellulose. The tall oil composition varies by wood species, growth location and annual season of felling, whereby it contains about 35-70 % fatty acids, 20-50 % resin acids, while the remaining portion consists of 5-30 % of neutral components. Today, a very minor amount of crude tall oil is used in unprocessed form. The major portion of crude tall oil is distilled into products that are consumed in, e.g., paint and adhesive manufacturing plants and production of tall oil soap. It must be noted that tall oil as a fuel is very close to fuel oil with a heat value of about 38 MJ/kg, which is greater than 90 % of the heat value of fuel oil. Moreover, as a low-ash/low-sulfur fuel, tall oil is readily combustible or gasifiable in a modified oil burner.

Concurrently, cellulose plants generally sell tall oil due to its very high energy content for use as an industrial raw material outside their own processes. While the use of tall oil as a raw material for biofuel has been investigated, implementing such a refinery unit in conjunction with cellulose plants would make it too small in size and, hence, an unprofitable investment. Besides the need for pressurized processing, one additional limitation is the need for pure hydrogen that elevates the operating costs of the process excessively. A further problem is that heavy-fuel-oil-like character of tall oil requires its storage temperature to be kept in excess of 60 °C, whereby its shipping also dictates special actions such as transport in insulated containers.

Still another hindrance arises therefrom that crude tall oil is not directly suitable as feedstock in an oil refinery unit, because the heavy hydrocarbon chains of the oil require special treatment procedures thus prohibiting its direct mixing with a synthetic biofuel. Moreover, the sulfur content of crude tall oil is high enough to prevent catalytic postprocessing.

However, tall oil can be used as feedstock for a gasifier with the provision that the gasifier has a burner-type gasifier unit. Unfortunately, this alternative bypasses the already recognized high refining potential of tall oil and exploits only the energy content of this byproduct. Additionally such an infeed to a low-temperature gasifier is difficult to arrange as these gasifiers generally are fixed-bed or fluidized-bed reactors.

Now the present invention offers an arrangement capable of utilizing all the potential of tall oil. An essential benefit results therefrom that a process according to the invention can also receive tall oil from plural cellulose plants. In a preferred embodiment of the invention, a distillation column is erected for processing tall oil. Herein, distillation means separation of the feedstock components from each other by evaporation. As the separate components condense at different temperature ranges, they can be recovered in the distillation process as separate fractions, i.e., separate distillates, so that one fraction may contain one or more components. In this fashion the light fractions are recovered as a distillate whose hydrocarbon chains are closely similar to the HFTL liquid generated in an FT reactor thereby principally comprising different kinds of fatty acids. These fractions are processed in a single hydrocracker, whereby the product yield of high-quality, high-biofuel-status end products in the BtL plant is elevated substantially. The refining process becomes economically viable inasmuch as the BtL plant already runs a correct process that can be utilized in the refinement of the tall oil distillate. In the arrangement according to the invention only the size and catalyst composition of reactors need be modified if necessary.

Complementing the first step, the heavy and low-quality fractions not directly usable as vehicle fuel obtained from the distillation process are gasified in the gasification process of the BtL plant whereby this process most advantageously is a high-temperature pressurized oxygen gasifier. These fractions typically are comprised of resin acids. As the amount of hydrocarbons is thus increased, more syngas can be processed that in turn improves the product yield of FT products and the overall productivity of the entire plant. In a similar fashion, the light, gaseous fractions of the distillation process are combined with the other gaseous process products of the BtL plant, whereby they are utilized as a hydrogen or energy source in the BtL plant processes or boilers of a power plant.

An essential feature of the arrangement according to the invention is to utilize tall oil in a BtL plant, most advantageously in a BtL plant directly integrated with a cellulose plant. The essential features of the invention are crucial to the disclosed method and its use as specified in the appended claims. More specifically, the invention is characterized by what is stated in the claims. The essential goal of the invention is to utilize tall oil in the process steps of a BtL plant in such a fashion that the end product is a high-quality biofuel.

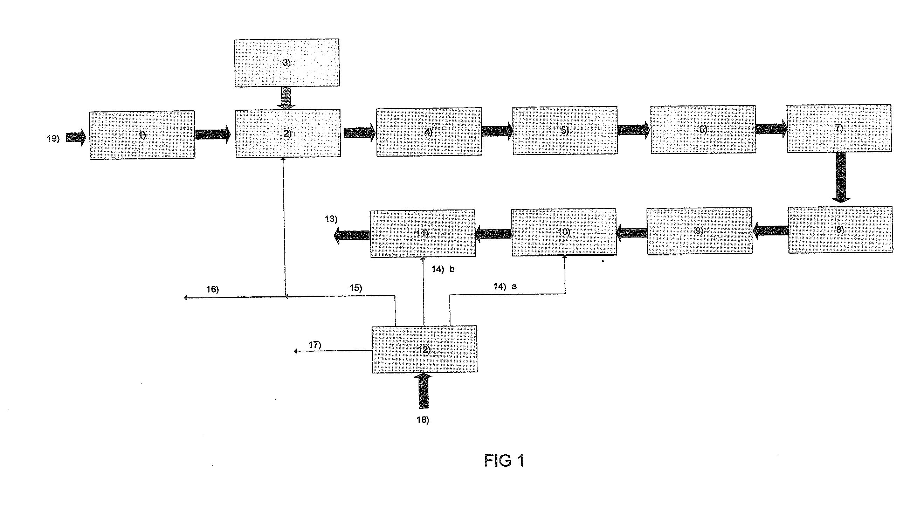

In the following, the invention is described in more detail with the help of a preferred embodiment by making reference to appended Figs. 1 - 3, in which drawings:
Figs. 1 - 3 show some process diagrams of arrangements for implementing the method according to the invention.

The process described below is related to a method depicted in Figs. 1 - 3 for utilizing tall oil in a BtL plant. An essential feature of the invention is that a BtL plant using the method can utilize tall oil in its different processes. An advantageous alternative is to run the process integrated in particular with a sulfate cellulose plant in such a fashion that the BtL plant uses crude tall oil obtained from the sulfate cellulose plant, whereby the crude tall oil is passed along a pipeline to a distillation column integrated with the refinery unit of the BtL plant.

Fig. 1 illustrates the stages of a BtL process. Solid biomass 19 is first taken to a biomass preprocessing step 1, wherein the biomass particle size and moisture content are homogenized. Next, the preprocessed biomass is fed to a high-temperature gasification step 2, whereto oxygen is passed from an oxygen plant 3. The gasification step may comprise a pregasification step, wherein the biomass is coked or torrefied, whereupon the pyrolysis gases released by the biomass are taken to a high-temperature oxygen gasifier and resulting product is milled and either passed to the burners of the high-temperature oxygen gasifier or the coke can be subjected to so-called chemical gas quenching, whereby the hydrogen content of the syngas increases and, due to endothermic reactions, the syngas is cooled. The water required in the reaction comes to the process along with the biomass or water may be injected separately into the gasifier.

C + H₂O -> CO + H₂

CO + H₂O -> CO₂ + H₂

The gas generated in the gasifier is cooled in a heat exchanger 4 and cleaned free from solid impurities in step 5. Next, the syngas pressure is elevated to the operating pressure of the refinery unit with the help of a compressor 6. The syngas hydrogen-carbon monoxide ratio is adjusted in step 7 and other components except for hydrogen and carbon monoxide are removed from the syngas in steps 8, whereupon the syngas can be fed to a Fischer-Tropsch reactor 9. The FT fractions exiting the FT reactor are refined in the refinery unit 10 of the plant and thereupon distilled in distillation column 11 into end products 13.

As shown in Fig. 1, in the preprocessing step 12 of tall oil 18, from tall oil 18 are separated those hydrocarbon fractions 14a/14b that due to their distillation properties and other qualities are close to the HFTL fraction processed in the FT reactor 9 from the syngas 8. The nonliquified light hydrocarbon fraction 17 are separated and used in energy generation, for instance. Depending on the tall oil preprocessing procedures and operating parameters of the refinery unit, the fatty oil distillates can be fed either via unit 14a to the hydrocracking process of the refinery unit or via unit 14b to end-product distillation. The difference between these alternatives is illustrated in Figs. 2 and 3.

When necessary, the refinery unit 10 of the BtL plant can be designed for an oversize capacity, whereby it can also process tall oil 18 received from plural sources. If a need in the process arises thereto, the hydrocracker unit can be complemented with a sulfur-removal facility or other modifications. No new process equipment or other postprocessing steps are required as will be described later in the text. In this fashion according to the invention, the light fractions of crude tall oil are processed into hydrocarbon chains of desired length and quality that are suited for processing high-quality biofuels.

The heaviest tall oil fractions generally known as bottoms distillate, bottoms oil or bottoms fraction 15 are processed in the gasification reactor 2 of the BtL plant and/or are used in energy generation 16. Furthermore, if necessary, the bottoms fraction 15 may be returned to the cellulose plant and burnt there in a lime kiln. According to the invention, the bottoms fraction (bottoms distillate) 15 of the distillation column contains tar-like hydrocarbon compounds of long carbon chains (longer than C₃₀) that are kept in a fluid state and next pumped from a storage container to the gasification reactor 2 of the BtL plant. The gasification reactor 2 is a pressurized oxygen gasifier most advantageously operated at a high temperature, whereto the comminuted biomass is fed in pulverized form into the burner section of the reactor, wherein it reacts with oxygen to produce raw syngas. The high-temperature gasifier facilitates a very simple arrangement for the gasification of the tall oil bottoms fraction. The gasifier needs an infeed distributor whereon the heated bottoms fraction is pumped. The feedstock will gasify completely and its ash will mix with the ash of the other raw material being combusted. No other new process equipment or refining steps are required as described later in the text. An essential feature is that depending on the amount of tall oil feedstock, the capacity of a BtL plant may be increased by as much as 5 - 50 % with regard to a plant not using tall oil as feedstock.

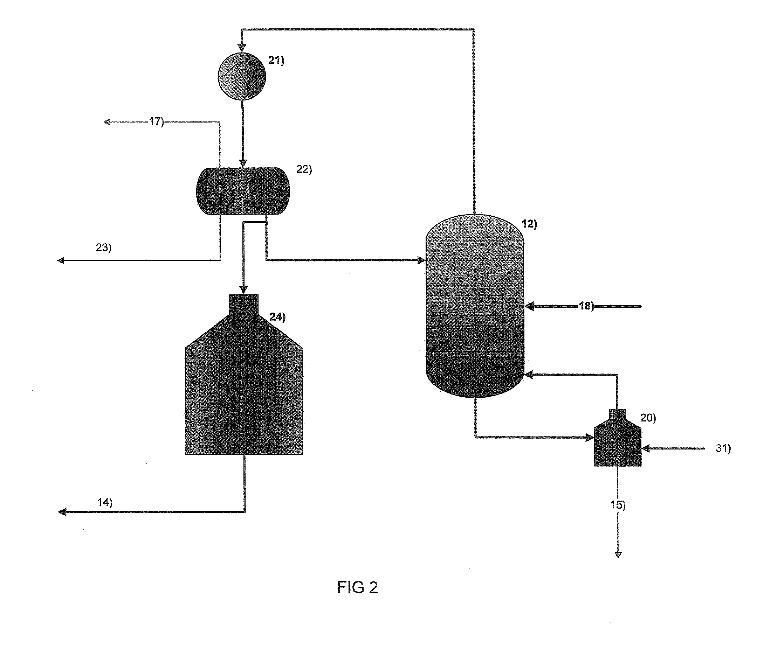

In Fig. 2 is illustrated an embodiment of a distillation process in more detail. Therein, tall oil 18 is fed into a distillation column 12. From the bottom of distillation column is removed tall oil in liquid form and passed to a heater 20, wherein the tall oil is evaporated. By virtue of keeping the heater temperature at a given level, the light fatty acids evaporating at a lower temperature are vaporized while the heavier fractions respectively remain in liquid form. Suitable temperature for the heater is 150-350 °C. Heating of the tall oil can be performed using various heat sources 31 available in a BtL plant such as steam, combustible gases or a portion of bottoms fraction 15 separated in the process.

Steam released from the distillation column 12 is condensed with the help of cooling water in a condenser 21 and the condensate is taken to a clarifier 22. Noncondensing gases 17 are passed from the condenser 22 to energy generation. Waste water 23 evaporated in the distillation column and condensed in the condenser is removed from the process. The light fraction 14 of tall oil principally comprising fatty acids are taken via a buffer container 24 to postprocessing. This variant of the invention is shown in Fig. 1 as alternative 14a, wherein if necessary a portion of the fraction is returned to the top of distillation column 12 to improve the temperature profile of the column.

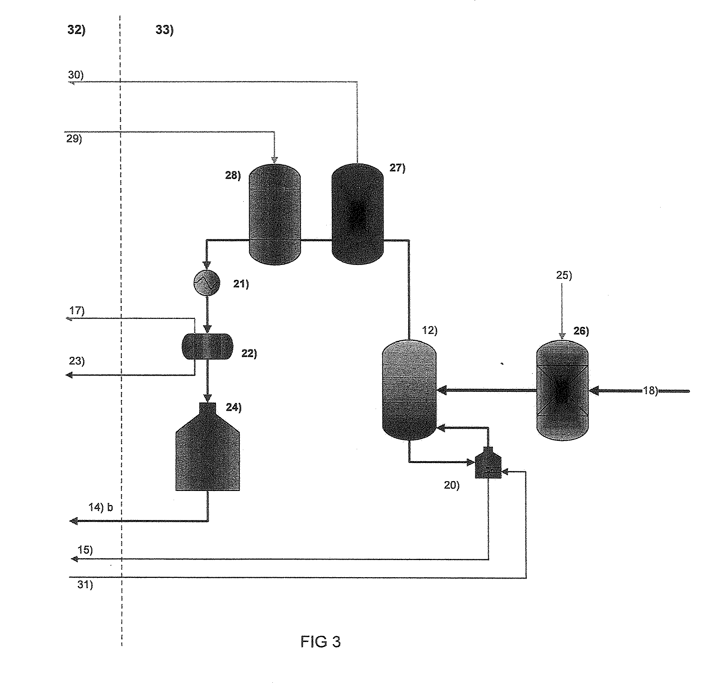

In Fig. 3 is shown another embodiment, also illustrated as alternative 14b in Fig. 1, wherein tall oil is processed further prior to feeding the distilled fractions to the BtL process. The embodiment of Fig. 2 is based on the assumption that the catalyst used in the hydrocracking of BtL products is also suitable for processing tall oil distillates. However, this is a challenging demand with respect to the catalyst being used inasmuch as tall oil contains sulfur that acts as a catalyst poison. Furthermore, it is most undesirable to allow sulfur to pass to the end product. In the embodiment shown in Fig. 3, the hydrocracking catalysts can be chosen separately for tall oil and biowax.

As shown in Fig. 3, tall oil 18 is passed to distillation column 12 via a possible pretreatment step 26. Herein, the pretreatment step 26 means, e.g., esterification of the fatty/resin acids of tall oil with the help of an additive 25, in the present case most advantageously with methanol. Sulfur 30 is removed from the fraction separated in distillation column 12, because it acts as a catalyst poison in the postprocessing unit 27. After the hydrogenation step 28, the distillate is condensed in step 21 and clarified in step 22.

In Fig. 3 is depicted as a horizontal dashed line the balance line of process flows between the BtL plant 32 and tall oil processing unit 33 so that the BtL plant 32 is to the left and tall oil processing unit 33 is to the right.

In the process according to the invention shown in Fig. 3, significant benefit is attained by complementing a BtL plant 32 with a tall oil processing unit 33. In this arrangement, hydrogen sulfide 30 from desulfurization can be treated in conjunction with hydrogen-sulfide-containing gas separated in the acid gas scrubber of the BtL process in the same catalytic or thermal gas treatment equipment to reduce its harmful release to the atmosphere. The BtL plant 32 provides hydrogen 29 stemming from the processing of the biomass, whereby biofuel status of process stays high. The BtL plant 32 includes cooling-water and waste-water processing facilities 23. Combustible gases 17 can be utilized either in the refinery unit furnaces of the BtL plant or, alternatively, the sulfur-free process gases can be reformed to produce hydrogen. The hydrogenated distillate 24 can be fed as a sidestream to the final distillation of the BtL product, while the bottoms distillate 15 is used in gasification or energy generation. If the tall oil-based biofuel is desired to be kept apart from the BtL biofuel, the distillate 24 may be later distilled into end products in a separate distillation plant. Furthermore, the BtL plant 32 provides energy in the form of steam or gases for heating the distillation equipment 31.

In accordance with the above, it is obvious that the invention provides significant benefits via the essential feature of the invention allowing the use of tall oil as feedstock in a BtL plant in the production a biofuel and facilitating efficient use of bottoms distillate in gasification, black liquor combustion or energy generation.

To a person skilled in the art it is obvious that the invention is not limited by the above-described exemplary embodiments, but rather may be varied within the inventive spirit and scope of the appended claims.

## Claims

1. A method for utilizing distillation fractions obtained from distillation (18) of tall oil (18) in a BtL plant (32), **characterized in that** the method utilizes tall oil (18) obtained from cellulose plants and processed into different fractions and passed to different points of the BtL process for producing biofuels and utilizing the same in the gasification step (2) and/or energy generation (16) of the BtL process.

2. The method of claim 1, **characterized in that** in the method to the refinery unit of the BtL plant (32) is integrated a fractionating distillation column (12), wherein the tall oil (18) is separated substantially into two fractionated streams of tall oil such that the lighter fraction (14a/14b) is processed further into hydrocarbon chains suited for producing high-quality biofuels while the heavier bottoms fraction (15) is passed to the gasification process (2) and/or energy generation (16) of the BtL plant.

3. The method of claim 1 or 2, **characterized in that** in the method the tall oil distillate (14a/14b) separated in the fractionating distillation column (12) is passed to a clarifier (22), wherein is separated the fraction that is to be refined and has a composition similar to the HFTL fraction produced in an FT reactor, while the remainder (17) of the lighter fractions is utilized in energy or hydrogen generation, for instance.

4. The method of claim 3, **characterized in that** in the method the lighter fractions (14b) of the tall oil distillate having a composition similar to the HFTL fraction produced in an FT reactor are pretreated (26) prior to separation in the fractionating distillation column (12), whereupon after the separation step the lighter fractions (14b) are passed to a refinery unit (27) and therefrom further to a hydrocracker (28).

5. The method of claim 1 or 2, **characterized in that** in the method the heavier tall oil bottoms fraction (15) received from the distillation column (12) is pumped to the gasification reactor of the BtL plant (32), advantageously a high-temperature gasification reactor (2) and/or, when necessary, is used in energy generation (16) or is returned for combustion in the lime kiln of the cellulose plant.

6. The method of claim 5, **characterized in that** in the method the high-temperature gasification reactor (2) is a pressurized oxygen gasifier whereto is fed the tall oil bottoms fraction (15) that joins with the gas resulting from the treatment of biomass in the reactor burner and reacts with oxygen thus generating raw syngas.

7. The method of any of claims 1 - 6, **characterized in that** depending on the amount of tall oil feedstock, the product yield of the BtL plant (32) increases by 5 - 50 %.

8. Use of tall oil (18) as feedstock in a BtL plant (32) for production of a synthetic biofuel and utilization thereof in the gasification step (2) of the BtL process and/or in energy generation (16).

9. The use according to claim 8 such that the BtL plant (32) is advantageously integrated with a cellulose plant, whereby the BtL plant utilizes tall oil (18) obtained from the plant integrated therewith and, when necessary, from other cellulose plants for producing biofuel and utilizing the same in the gasification step (2) of the BtL process and/or in energy generation (16).

10. The use according to claim 8 or 9 of tall oil (18) so that the tall oil is separated prior to the gasification step (2) of the BtL plant (32) in a fractionating distillation column (12) into a light tall oil fraction (14a/14b) that is processed together with HFTL fraction obtained from the BtL process.

11. The use according to any of claims 8 - 10 of tall oil (18) so that the tall oil is preprocessed (26), refined (27) and passed to a hydrocracker (28) thereby producing a tall oil fraction (14b) that is passed forward as a sidestream to the final distillation step of the BtL product for producing a biofuel.

12. The use according to claim 8 of tall oil (18) so that the heavier bottoms fraction (15) obtained from the distillation column (12) is utilized in the gasification process (2) and/or energy generation (16) of the BtL plant or in the lime kiln of the cellulose plant whereto the BtL plant is integrated.
